Europäisches Patentamt

European Patent Office

Office européen des brevets

(11) Veröffentlichungsnummer: **0 461 513 A2**

# (12) EUROPÄISCHE PATENTANMELDUNG

(21) Anmeldenummer: 91109066.0

(22) Anmeldetag: 04.06.91

(51) Int. Cl.5: **B65B 5/10, B65B 35/50**

(30) Priorität: 09.06.90 DE 4018517

(43) Veröffentlichungstag der Anmeldung:
18.12.91 Patentblatt 91/51

(84) Benannte Vertragsstaaten:
AT BE CH DE DK ES FR GB GR IT LI LU NL SE

(71) Anmelder: Hauers, Manfred
Alt Breyeller Weg 21
W-4060 Viersen 11(DE)

Anmelder: Vits, Dieter
Görlitzer Strasse 5- 7
W-4040 Neuss 1(DE)

(72) Erfinder: Hauers, Manfred
Alt Breyeller Weg 21
W-4060 Viersen 11(DE)
Erfinder: Vits, Dieter
Görlitzer Strasse 5- 7
W-4040 Neuss 1(DE)

(74) Vertreter: Döring, Wolfgang, Dr. Ing.
Mörikestrasse 18
W-4000 Düsseldorf 30(DE)

(54) Vorrichtung zum Abpacken von im Querschnitt etwa dreieckig oder tropfenförmig ausgebildeten Behältern.

(57) Es wird eine Vorrichtung zum Abpacken von im Schnitt etwa dreieckförmig oder tropfenförmig ausgebildeten starren oder flexiblen Behältnissen, insbesondere gefüllten Folienbeuteln, beschrieben. Die Vorrichtung umfaßt eine Fördereinrichtung zum Fördern der Behältnisse nacheinander zu einer Abgabeeinrichtung, eine Abgabeeinrichtung (4), die die Behältnisse nacheinander in eine darunter befindliche Aufnahmekassette (7) abgibt, eine um 180° drehbare Aufnahmekassette unter der Abgabeeinrichtung zur Ausbildung von mindestens einer aus gegensinnig gerichteten, sich mindestens mit ihren spitzen Endabschnitten überlagernden Behältnissen bestehende Lage und eine unter der Aufnahmekassette angeordnete Ablageeinrichtung. Die Kassette nimmt in der Nullgrad-Stellung ein Behältnis und nach Drehung in der 180°-Stellung das nächste Behältnis auf. Durch die sich mit ihren spitzen Endabschnitten überlappenden Behältnisse wird eine optimale Raumausnutzung in einer Endverpackung erzielt.

FIG. 2

Die vorliegende Erfindung betrifft eine Vorrichtung zum Abpacken von im Schnitt etwa dreieckförmig oder tropfenförmig ausgebildeten starren oder flexiblen Behältnissen, insbesondere gefüllten Folienbeuteln.

Derartige Vorrichtungen sind bekannt. Bei einer dieser bekannten Vorrichtungen werden die Behältnisse, bei denen es sich um flexible Folienbeutel handelt, zu einer Lage angeordnet, in der sich die einzelnen Behältnisse seitlich überlappen (schuppenweise Lagerung). Die auf diese Weise hergestellte Lage wird dann in ein entsprechendes Großbehältnis, wie beispielsweise einen Karton, eingebracht.

Der Erfindung liegt die Aufgabe zugrunde, eine Vorrichtung der angegebenen Art zu schaffen, mit der die Behältnisse unter Benötigung eines besonders geringen Raumbedarfes abgepackt werden können.

Diese Aufgabe wird erfindungsgemäß bei einer Vorrichtung der angegebenen Art durch die kennzeichnenden Merkmale des Patentanspruchs 1 gelöst.

Der Kern der erfindungsgemäßen Lösung ist darin zu sehen, daß hierbei jeweils zwei Behältnisse gegensinnig zueinander ausgerichtet werden, so daß sich die Behältnisse mindestens mit ihren spitzen Endabschnitten überlagern. Der Überlappungsgrad kann hierbei von 0 bis 100% variiert werden, je nach den gestellten Anforderungen. Es ergibt sich daher eine aus zwei gegensinnig gerichteten (geschuppten) Behältnissen bestehende Lage, durch die ein minimaler Raumbedarf in Quer- und je nach Schuppungsgrad in Längsrichtung der Behältnisse benötigt wird. Mit Hilfe der anmeldungsgemäß vorgesehenen Aufnahmekassette können eine Lage oder mehrere Lagen übereinander angeordnet werden. Mit Hilfe der erfindungsgemäß vorgesehenen Ablageeinrichtung können mehrere dieser Lagen nebeneinander angeordnet werden, so daß sich eine aus einer Vielzahl von paarweise gegensinnig angeordneten Behältnissen bestehende Gesamtlage ergibt. Wenn die Ablageeinrichtung direkt als für die Endverpackung dienendes Großbehältnis, beispielsweise Karton, ausgebildet ist, wird diese Gesamtlage unmittelbar innerhalb der Endverpackung hergestellt. Ist die Ablageeinrichtung als Zwischenelement ausgebildet, wird die Gesamtlage in einer Zwischenstufe vor der Einführung in die Endverpackung hergestellt und dann beispielsweise in die Endverpackung abgesenkt.

Die Lage aus den beiden gegensinnig zueinander angeordneten Behältnissen wird mittels der unter der Abgabeeinrichtung angeordneten, um 180° drehbaren Aufnahmekassette hergestellt. In die Aufnahmekassette wird ein erstes Behältnis eingegeben, wonach die Kassette um 180° gedreht wird. Es wird dann ein zweites Behältnis eingeführt, das mit seinem spitz zulaufenden Endabschnitt gegen den spitz zulaufenden Endabschnitt des ersten Behältnisses weist bzw., je nach gewünschtem Überlappungsgrad, mit seinem Endabschnitt den entsprechenden Endabschnitt des ersten Behältnisses überlagert. Wird eine totale Überlappung gewünscht, liegt das zweite Behältnis vollständig auf dem ersten Behältnis auf, wobei sich beide Dreiecks- bzw. Tropfenformen im Schnitt etwa zu einer Rechteckform ergänzen. Die Aufnahmekassette stellt sicher, daß die beiden Behältnisse nicht in seitlicher Richtung gegeneinander verschoben sind. Dies wird durch eine entsprechende Anordnung der Seitenwände der Aufnahmekassette erreicht, die als Anschlagelemente für die jeweiligen Behältnisse dienen. Durch eine entsprechende Verschiebung der Stirnwände der Aufnahmekassette kann der Überlappungsgrad bzw. Schuppungsgrad (in Verbindung mit einer entsprechenden Veränderung der Abgabeeinrichtung) variiert werden.

Bei den mit der erfindungsgemäß ausgebildeten Vorrichtung abzupackenden Behältnissen kann es sich um starre oder flexible, leere oder gefüllte Behältnisse handeln. Die erfindungsgemäße Vorrichtung ist insbesondere geeignet zum Abpacken von gefüllten Folienbeuteln (Schlauch- und Flachbeutel), die im Längsschnitt etwa eine Dreiecksoder Tropfenform besitzen. Die Behältnisse werden über eine Fördereinrichtung nacheinander zu der erfindungsgemäß vorgesehenen Aufnahmekassette geführt. Diese Fördereinrichtung stellt sicher, daß die Behältnisse einen ausreichenden Abstand voneinander haben, damit bei einer besonderen Ausführungsform eine Abgabeeinrichtung ein Behältnis in die darunter befindliche Aufnahmekassette abgeben und in ihre Ausgangsposition zurückkehren kann, bevor sich das nächste Behältnis der Abgabeeinrichtung nähert. Das entsprechende Behältnis wird über geeignete Positionierungsvorrichtungen derart in bzw. auf der Abgabeeinrichtung positioniert, daß es sich unmittelbar über der entsprechenden Aufnahmekassette befindet, so daß es durch Schwerkraft in diese gelangt. Nach Drehung der Aufnahmekassette um 180° kann das nächste Behältnis, das eine entsprechende Lage in bzw. auf der Abgabeeinrichtung einnimmt wie das vorherige Behältnis, durch Schwerkraft in die Aufnahmekassette eingeführt werden.

Um den Überlappungs- bzw. Schuppungsgrad zwischen den beiden Behältnissen in der Aufnahmekassette zu variieren, werden neben dem entsprechenden Versatz der Stirnwände der Aufnahmekassette die Positionierungseinrichtungen der Abgabeeinrichtung verschoben. Hierdurch geraten die Behältnisse in bzw. auf der Abgabeeinrichtung in eine vom Drehpunkt der darunter befindlichen Aufnahmekassette weiter entfernte Lage, so daß sie sich in der Aufnahmekassette weniger überlappen.

Durch entsprechendes Verschieben der Positionierungseinrichtungen an der Abgabeeinrichtung in die entgegengesetzte Richtung kann der umgekehrte Effekt erreicht werden.

Nachdem die Kassette die beiden Behältnisse zur Ausbildung einer Lage aufgenommen hat, kann sie entweder geöffnet werden, so daß die Behältnislage die Kassette nach unten verläßt, oder es kann eine zweite Lage mit zwei gegensinnig zueinander ausgerichteten Behältnissen auf der ersten Lage ausgebildet werden. Je nach Wunsch und Gegebenheiten kann die Kassette weitere übereinander angeordnete Lagen aufnehmen. Beim Öffnen der Kassette fallen dann sämtliche Lagen auf die darunter befindliche Ablageeinrichtung.

Wie erwähnt, kann die unter der Aufnahmekassette angeordnete Ablageeinrichtung durch eine Endverpackung (Karton) oder durch eine Zwischenfördereinrichtung gebildet werden. Im ersten Fall werden die Behältnislage oder die Behältnislagen unmittelbar in die Endverpackung abgesenkt. Wenn die Endverpackung zur Aufnahme von mehreren nebeneinander angeordneten Lagen ausgebildet ist, wird sie unter der Aufnahmekassette verschoben, so daß sich bei jedem Öffnen der Aufnahmekassette eine neue Lage neben der vorhergehenden Lage aufbaut. Auf diese Weise kann die ganze Endverpackung gefüllt werden. Ist der Boden der Endverpackung bedeckt, bewegt sich diese zurück in ihre Ausgangslage, so daß wieder mit der ersten Lage einer neuen Schicht begonnen werden kann.

Das gleiche Prinzip wird im wesentlichen auch dann verwirklicht, wenn die Ablageeinrichtung als Zwischenförderelement ausgebildet ist. Hierbei kann die Lage beispielsweise auf ein seitlich verschiebbares Transportband fallen, auf dem sich durch seitliches Transportieren eine Gesamtlage der Behältnisse bildet. Wenn auf diese weise eine Gesamtlage auf dem Transportband angeordnet ist, wird dieses seitlich verschoben, beispielsweise unter eine stationäre Saugglocke, von der die Gesamtlage vom Transportband abgehoben und in eine geeignete Endverpackung abgesenkt wird. Es kann dann eine erneute Gesamtlage auf dem Transportband ausgebildet werden. Die Ablageeinrichtung kann jedoch beispielsweise auch als großes Klappenpaar ausgebildet sein, auf dem sich durch seitliches Verschieben des Klappenpaares eine Gesamtlage von Behältnissen ausbildet. Wenn die Gesamtlage fertig ist, öffnet das Klappenpaar, und die gesamte Lage fällt in die bereits stehende Endverpackung (Faltkarton). Nach dem Öffnen fährt das Klappenpaar wieder seitlich bei gleichzeitigem Verschließen der Klappen in die Ausgangsposition zurück, so daß es für die Aufnahme der nächsten beiden Behältnisse (eine Lage) wieder bereit ist.

Andere Ausführungsformen der Ablageeinrichtung sind ebenfalls möglich. Jedenfalls ist die Erfindung nicht auf die hier beschriebenen Ausführungsformen beschränkt.

Bei einer anderen Ausführungsform fällt eine Lage auf eine als Transportband ausgebildete Ablageeinrichtung, auf dem sich durch seitliches Transportieren eine Gesamtlage bildet. Ist die Gesamtlage fertig, so wird der seitliche Vorschub in der Art vergrößert, daß zum einen ein Abstand zwischen den Lagen entsteht, und zum anderen die fertige Lage sich beim nächsten Takt unter einer Saugglocke befindet bzw. dort plaziert wird. Das Einlagesystem besteht aus mindestens zwei Saugglokken, die an einem Drehkreuz befestigt sind. Das Drehkreuz ist analog hierzu um 180° schwenkbar. Eine Saugglocke befindet sich über dem Transportband, die andere über der Öffnung eines Behälters (Faltkarton). Beide Saugglocken sind absenkbar, zum einen zum Abheben vom Transportband, zum anderen zum Ablegen in den Behälter. Dies geschieht im Wechsel.

Die erfindungsgemäß ausgebildete Vorrichtung bietet eine Reihe von Vorteilen. Der größte Vorteil ist darin zu sehen, daß durch die stirnseitige Schuppung der Behältnisse ein besonders niedriger Raumbedarf für die Verpackung erforderlich ist. Die Behältnisse (Beutel) müssen nicht egalisiert werden, wodurch sich eine besonders schonende Produktbehandlung mit geringem Aufwand ergibt. Die Vorrichtung muß keine besonderen Bedingungen erfüllen (einfache Zuführung, kein Wenden, keine Rutsche). Durch das stirnseitige Gegeneinanderschuppen wird in der Endverpackung (Faltkarton) ein besonders hoher Füllgrad erreicht. Neben der stirnseitigen Schuppung (Längsschuppung), die von 0 bis 100% möglich ist, kann zusätzlich eine Querschuppung der Behältnispaare von 0 - 25% durchgeführt werden. Hierdurch ist eine Abpackung weitgehend in Standardbehältergrößen möglich.

Das bei Faltpackern bekannte Verspringen der ersten Beutel bzw. ersten Beutelreihen wird durch den Abwurf der ganzen Behältnislage verhindert. Hierbei sperren die Beutel gegeneinander. Durch das Abwerfen der ganzen Behältnislage wird die Aufprallwucht erheblich gedämpft (Luftverdrängung im Faltkarton). Ferner ergibt sich hierdurch eine optimale Wechselzeit für die Endverpackung (Faltkarton), auch bei geringer Beutelzahl/Gesamtlage. Die erfindungsgemäß ausgebildete Vorrichtung benötigt eine besonders geringe Standfläche in bezug auf den entsprechenden Formatbereich der Maschine. Es sind kurze Wege gegeben, so daß sich eine hohe Leistung und Betriebssicherheit erreichen läßt.

In Weiterbildung dar Erfindung umfaßt die Fördereinrichtung ein etwa horizontales Beschleunigungsband. Die Behälter werden dabei beispielsweise von einem Transport-Steigband von einer Beutelfüllmaschine auf das in der Regel höher liegende Beschleunigungsband gefördert, wobei sie vorzugsweise mit ihrer Fußseite (Bereich der größten Produktansammlung bzw. größte Höhe) in Förderrichtung liegen. Durch das horizontale Beschleunigungsband wird die Geschwindigkeit der Behältnisse um einen Betrag erhöht, der ausreicht, daß die Behältnisse sicher bis zur Abgabeeinrichtung gleiten. Andererseits wird der Teilungsabstand der Behältnisse um so viel vergrößert, daß die Funktion der Abgabeeinrichtung (Öffnen und Schließen derselben) gewährleistet ist.

Zweckmäßigerweise umfaßt die Abgabeeinrichtung mindestens eine Klappe, die im Horizontalzustand ein Behältnis aufnimmt und durch Drehen der Klappe nach unten abgibt. Bei einer besonders bevorzugten Ausführungsform weist die Abgabeeinrichtung zwei nebeneinander angeordnete und zusammenwirkende Klappen auf, die im Horizontalzustand jeweils einen Teil eines Behältnisses aufnehmen und dieses durch gleichzeitige Drehung beider Klappen nach unten abgegeben. Wird bei der letztgenannten Ausführungsform nur eine Klappe geöffnet, führt das Behältnis beim Fallen in die Aufnahmekassette eine Drehung um seine Längsachse um 180° aus. Werden beide Klappen gleichzeitig geöffnet, wird das Behältnis beim Herabfallen nicht gedreht. Fallhöhe und Formatbreite der Behältnisse sind aufeinander abgestimmt.

Der Klappe ist vorzugsweise am in Förderrichtung vorderen Ende ein verstellbares und entfernbares Anschlagelement zugeordnet. Durch Verstellung dieses Anschlagelementes läßt sich die Position des entsprechenden Behältnisses verändern, so daß dieses, wie vorstehend bereits erwähnt, unterschiedliche Lagen in der darunter befindlichen Aufnahmekassette einnehmen kann. Auf diese Weise läßt sich der Überlappungs- bzw. Schuppungsgrad zwischen zwei Behältnissen in der Kassette variieren. Durch die Entfernbarkeit des Anschlages können bei einer Störung des Systems die Behältnisse über die Klappe bzw. Klappen hinweg beispielsweise auf eine Rutsche gelangen bzw. abgeräumt werden. Die Geschwindigkeit des Beschleunigungsbandes kann hierzu entsprechend erhöht werden.

Die Aufnahmekassette weist zweckmäßigerweise einen sich mittig öffnenden Klappboden auf. Hierdurch wird sichergestellt, daß eine Lage bzw. mehrere übereinander angeordnete Lagen von Behältnissen sicher aus der Aufnahmekassette auf die darunter angeordnete Ablageeinrichtung fallen, ohne daß sich beispielsweise Verschiebungen der Behältnisse gegeneinander ergeben.

Die Drehung der Aufnahmekassette erfolgt vorzugsweise mit Hilfe eines Schrittmotors, der derart getaktet ist, daß in seinen Antriebspausen die Behältnisse in die Kassette einführbar und die gebildete Lage aus der Kassette abführbar ist. Liegt das erste Behältnis ordnungsgemäß in der Kassette, so wird diese um 180° gedreht. Es kann jetzt das zugehörige zweite Behältnis in die Kassette eingeführt werden. Wenn das zweite Behältnis ordnungsgemäß seine Lage in der Kassette eingenommen hat, wird entweder der Kassettenboden geöffnet, um die Lage auf die darunter befindliche Ablageeinrichtung abzugeben, oder es erfolgt die Einführung von weiteren Behältnissen in die Kassette mit entsprechenden Drehvorgängen dazwischen, um mehrere Lagen übereinander auszubilden. Bei dieser Ausführungsform wird der Boden erst nach Aufbau des gewünschten Lagenpaketes geöffnet.

Zur Durchführung der vorstehend beschriebenen Vorgänge - Öffnen und Schließen der Klappen der Abgabeeinrichtung, Drehen der Aufnahmekassette, Öffnen und Schließen des Bodens der Aufnahmekassette - sind geeignete Steuereinrichtungen vorgesehen.

Die erfindungsgemäß ausgebildete Vorrichtung ist für verschiedene Behältnisgrößen geeignet. Wenn von kleinen Behältnissen auf größere Behältnisse übergegangen werden soll, werden entweder die Stirn- und/oder Seitenwände der Aufnahmekassette versetzt oder die vorhandene Aufnahmekassette wird durch eine größere Aufnahmekassette ausgetauscht, indem die Kassette von einer vorhandenen Montageeinrichtung demontiert und eine neue Kassette dort montiert wird. Je nach Behältergröße müssen hierzu auch die Positionierungseinrichtungen (Anschlagelemente) an der Abgabeeinrichtung verschoben werden. Soll von größeren Behältnissen auf kleinere Behältnisse übergegangen werden, erfolgt das Versetzen der Elemente bzw. der Austausch in umgekehrter Weise. Die Vorrichtung läßt sich somit sehr rasch umrüsten und ist für eine Vielzahl von unterschiedlichen Behältnisgrößen geeignet.

Verschiedenartige Ausbildungsmöglichkeiten der Ablageeinrichtung wurden bereits vorstehend erläutert.

Die Erfindung wird nachfolgend anhand eines Ausführungsbeispiels in Verbindung mit der Zeichnung im einzelnen erläutert. Es zeigen:

Figur 1   eine Seitenansicht einer Vorrichtung zum Abpacken, teilweise im Schnitt;

Figur 2   eine Frontansicht der Vorrichtung der Figur 1, teilweise im Schnitt; und

Figur 3   eine Draufsicht auf die in den Figuren 1 und 2 gezeigte Vorrichtung.

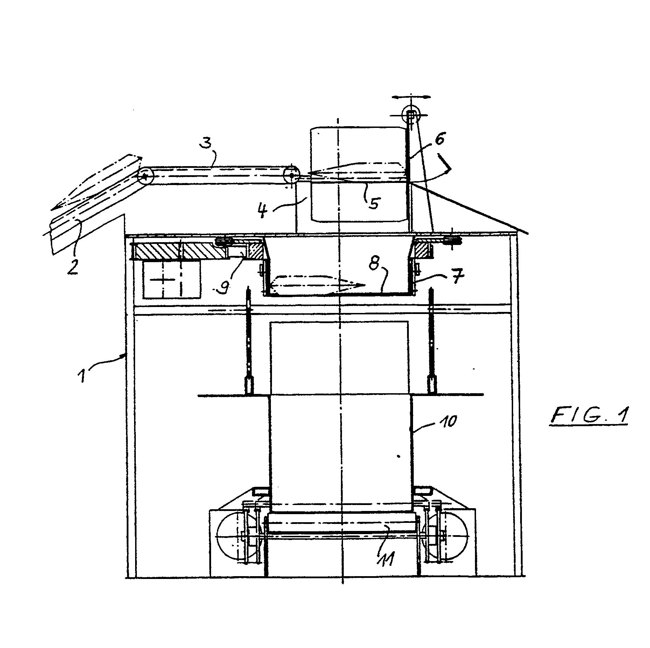

Wie man der Figur 1 entnehmen kann, werden die Behältnisse, bei denen es sich hier um gefüllte Folienbeutel handelt, von einem Transport-Steigband 2 von einer Beutelfüllmaschine auf ein höher liegendes horizontales Beschleunigungsband 3 gefördert. Die Beutel liegen hierbei mit der Fußseite (Bereich der größten Produktansammlung) in Förderrichtung.

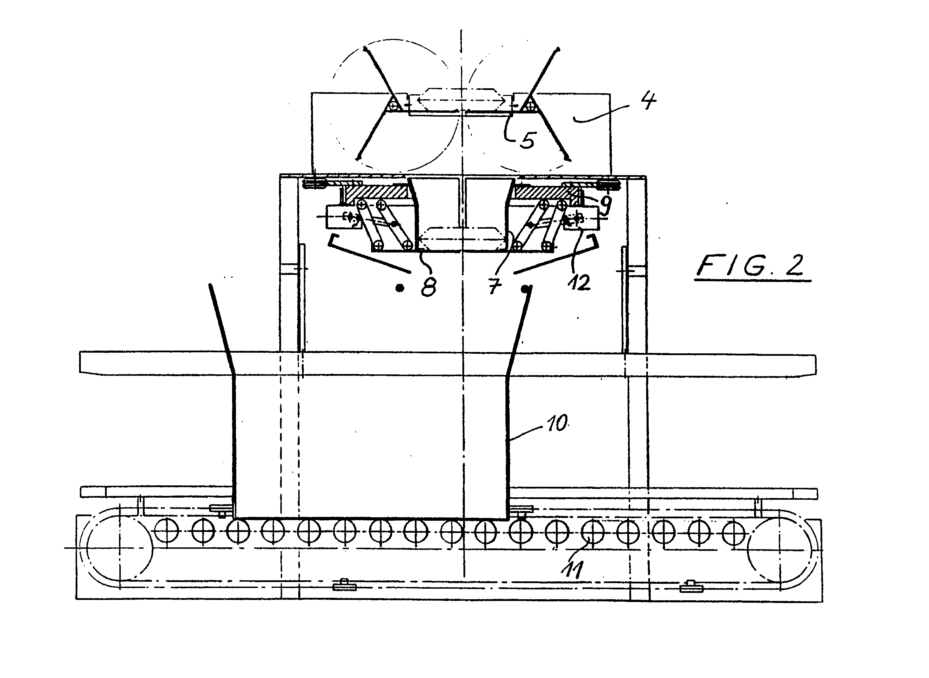

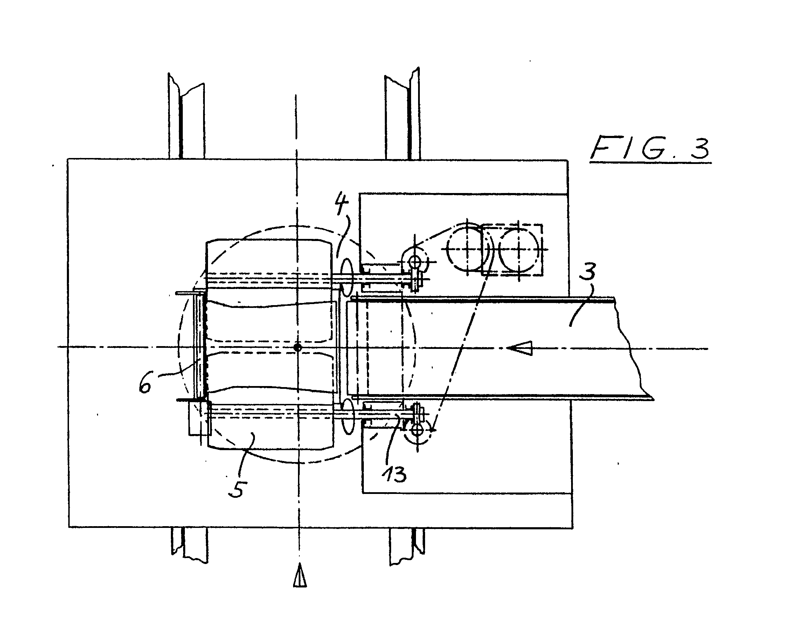

Das horizontale Beschleunigungsband 3 erhöht die Beutelgeschwindigkeit um einen Betrag, der einerseits ausreicht, daß die Beutel sicher bis zu einem Anschlag 6 einer in Förderrichtung nach dem Beschleunigungsband 3 angeordneten Abgabeeinrichtung gleiten, und andererseits der Teilungsabstand der Beutel um so viel vergrößert wird, daß das Abgabesystem die Beutel einwandfrei nach unten abgeben kann. Die Abgabeeinrichtung 4 ist als Klappensystem ausgebildet und besitzt, wie insbesondere aus den Figuren 2 und 3 hervorgeht, zwei nebeneinander angeordnete, jeweils um eine Horizontalachse drehbare Klappeneinheiten, die jeweils drei Klappen 5 aufweisen. In der in den Figuren dargestellten Stellung der Klappeneinheiten, in der sich eine Klappe 5 in Horizontallage befindet, gelangt ein Beutel auf zwei nebeneinander befindliche, horizontal angeordnete Klappen 5, wobei seine Vorwärtsbewegung durch einen stirnseitig angeordneten Anschlag 6 gestoppt wird. Der Beutel liegt dabei so auf den beiden Klappen auf, daß sich jeweils etwa eine Beutelhälfte auf einer Klappe befindet. In dieser Lage nimmt der Beutel seine Abgabestellung ein.

Der stirnseitig vorgesehene Anschlag 6 kann verstellt und weggeschwenkt werden. Im zweiten Fall laufen dann die Beutel über die Abgabeeinrichtung hinweg und können beispielsweise über eine Rutsche abgeführt werden. Dies ist für eventuelle Störfälle der Vorrichtung vorgesehen. Eine Verstellung des Anschlages wird vorgenommen, wenn Beutel anderer Größe mit der Vorrichtung abgepackt werden sollen.

Wenn sich der Beutel in der Abgabestellung auf den beiden Klappen 5 befindet, werden die beiden Wellen 13 der Klappeneinheiten gegensinnig über eine geeignete Antriebseinrichtung gedreht, so daß der Beutel nach unten in eine Aufnahmekassette 7 fällt. Wenn eine Drehung des Beutels um 180° um seine Längsachse gewünscht wird, wird nur eine Klappe 5 nach unten weggedreht.

Bei der Aufnahmekassette 7 handelt es sich um einen etwa rechteckförmig ausgebildeten, oben offenen Kasten, der entsprechende Seitenwände, Stirnwände und einen Boden 8 aufweist. Der Boden 8 besteht aus zwei Bodenhälften, die sich seitlich über die Kassettenseitenwände hinaus erstrecken und über einen geeigneten Antriebsmechanismus 12 nach unten abschwenkbar sind. Wenn daher beide Bodenhälften nach unten verschwenkt werden, fällt der in der Kassette befindliche Beutel nach unten.

In dem in Figur 1 gezeigten Zustand befindet sich bereits ein Beutel in der Aufnahmekassette 7. Der Beutel ist so in der Kassette angeordnet, daß sein Fußende zur Stirnwand der Kassette weist, während sein spitz zulaufendes Ende zur Mitte der Kassette hin zeigt. Wie Figur 1 zeigt, ist die Aufnahmekassette 7 gegenüber ihrer Stellung, in der sie den Beutel aufgenommen hat, um 180° verdreht worden. Sie ist nunmehr zur Aufnahme eines zweiten, auf den Klappen der Abgabeeinrichtung befindlichen Beutels bereit. Wenn der zweite Beutel in die Kassette fällt, kommt sein spitz zulaufendes Ende auf dem spitz zulaufenden Ende des ersten Beutels zu liegen, so daß sich eine entsprechende Überlappung bzw. Schuppung zwischen beiden Beuteln ergibt. Beide Beutel bilden eine Lage, die aufgrund der gegensinnigen Anordnung der Beutel und deren Überlappung eine optimale Raumausnutzung bietet. Nach der ersten Lage kann eine zweite Lage, die ebenfalls aus zwei Beuteln besteht, in der Kassette angeordnet werden. Zum Aufbau dieser Lage ist wiederum eine Drehung der Kassette um 180° erforderlich, die mittels eines geeigneten Antriebes 9 bewerkstelligt wird.

Zur besseren Aufnahme der Beutel in der Kassette sind die Seiten- und Stirnwände derselben nach oben trichterförmig aufgeweitet. Die Beutel liegen sowohl an den Stirnwänden als auch an den Seitenwänden der Kassette an. Durch die trichterförmige Aufweitung werden Positionsverschiebungen der Beutel kompensiert, so daß sich ein exakter Aufbau der Beutel übereinander erzielen läßt.

Durch Verstellung der Stirn- und/oder Seitenwände der Aufnahmekassette 7 läßt sich diese auf ein anderes Beutelformat umstellen. Dies kann in Verbindung mit einer Verstellung des Anschlages 6 geschehen. Auf diese Weise läßt sich auch der Überlappungsgrad bzw. Schuppungsgrad der Beutel variieren.

Nach dem Aufbau der gewünschten Lagen in der Aufnahmekassette 7 wird der Kassettenboden 8 geöffnet, indem die beiden Bodenhälften gleichzeitig nach unten abgeschwenkt werden. Die Beutellagen fallen dann in eine darunter befindliche Endverpackung 10, beispielsweise einen Faltkarton. Diese Endverpackung 10 ist auf einem Querförderband 11 angeordnet und wird schrittweise nach jedem Abgabevorgang aus der Kassette weiter bewegt, so daß auf diese Weise die Endverpackung 10 vollständig mit Beuteln aufgefüllt wird. Durch die verschuppte Lage der einzelnen Beutel ergibt sich dabei eine optimale Raumausnutzung.

Vorstehend wurde ein Ausführungsbeispiel einer erfindungsgemäß ausgebildeten Abpackvorrichtung beschrieben, die eine speziell ausgebildete Abgabeeinrichtung 4 oberhalb der Aufnahmekassette besitzt. Eine solche Abgabeeinrichtung 4 ist jedoch nicht unbedingt erforderlich. Vielmehr können die Behältnisse von der Fördereinrichtung direkt in die Aufnahmekassette eingeführt (geworfen) werden, wenn eine entsprechende Geschwindig-

keitssteuerung und Höhenabstimmung der Förder-einrichtung vorgenommen wird. Auch bei dieser Variante nimmt die Aufnahmekassette in der Nullgrad-Stellung ein Behältnis und nach Drehung in der 180°-Stellung das nächste Behältnis auf.

Wenn eine Abgabeeinrichtung 4 vorhanden ist, so muß diese auch nicht unbedingt als das vorstehend beschriebene Klappensystem ausgebildet sein. Eine Ausbildung als Drehstern ist ebenfalls möglich.

In Weiterbildung weist die erfindungsgemäße Vorrichtung mindestens eine den Abstand der Behältnisse auf der Fördereinrichtung und/oder den Zustand der Behältnisse überwachende Einrichtung auf. Hierbei kann es sich um ein geeignetes Fotozellensystem handeln. Die von dieser Einrichtung erzeugten Signale werden einer Steuereinrichtung zugeführt, die zum Ausschleusen von Behältnissen das Anschlagelement 6 der Abgabeeinrichtung 4 zum zeitweisen Entfernen desselben ansteuert. Wenn somit die Überwachungseinrichtung einen zu engen Abstand der Behältnisse feststellt, so wird durch entsprechendes zeitweises Entfernen (Wegschwenken) des Anschlagelementes 6 das den zu engen Abstand bewirkende Behältnis ausgeschleust. Das Anschlagelement wird danach wieder in seine Ausgangsstellung zurückbewegt, so daß die folgenden Behältnisse korrekt in die Aufnahmekassette abgegeben werden können. Eine solche Funktionsweise ist ebenfalls in bezug auf Behältnisse möglich, die sich in keinem korrekten Zustand befinden, beispielsweise einen zu niedrigen Füllgrad besitzen oder defekt sind. Dieser Zustand wird ebenfalls durch eine geeignete Überwachungseinrichtung erfaßt.

**Patentansprüche**

1. Vorrichtung zum Abpacken von im Schnitt etwa dreieckförmig oder tropfenförmig ausgebildeten starren oder flexiblen Behältnissen, insbesondere gefüllten Folienbeuteln, gekennzeichnet durch
   (1) eine Fördereinrichtung (2, 3) zum Fördern der Behältnisse nacheinander in eine Aufnahmekassette (7);
   (2) eine um 180° drehbare Aufnahmekassette (7) zur Ausbildung von mindestens einer aus zwei gegensinnig gerichteten, sich mindestens mit ihren spitzen Endabschnitten überlagernden Behältnissen bestehenden Lage, die in der Nullgrad-Stellung ein Behältnis und nach Drehung in der 180°-Stellung das nächste Behältnis aufnimmt und die zur Abgabe der Behältnislage nach unten öffenbar ist; und
   (3) eine unter der Aufnahmekassette (7) angeordnete Ablageeinrichtung (10) für die mindestens eine Lage.

2. Vorrichtung nach Anspruch 1, dadurch gekennzeichnet, daß die Fördereinrichtung (2, 3) die Behältnisse nacheinander zu einer Abgabeeinrichtung (4) fördert, die die Behältnisse nacheinander in die darunter befindliche Aufnahmekassette (7) abgibt.

3. Vorrichtung nach Anspruch 1 oder 2, dadurch gekennzeichnet, daß die Fördereinrichtung ein etwa horizontales Beschleunigungsband (3) umfaßt.

4. Vorrichtung nach Anspruch 2 oder 3, dadurch gekennzeichnet, daß die Abgabeeinrichtung (4) mindestens eine um eine horizontale Achse drehbare Klappe (5) umfaßt, die im Horizontalzustand ein Behältnis aufnimmt und durch Drehung der Klappe (5) nach unten abgibt.

5. Vorrichtung nach Anspruch 4, dadurch gekennzeichnet, daß die Abgabeeinrichtung (4) zwei nebeneinander angeordnete und zusammenwirkende Klappen (5) aufweist, die im Horizontalzustand jeweils einen Teil eines Behältnisses aufnehmen und dieses durch gleichzeitige Drehung oder gleichzeitiges Wegschwenken beider Klappen nach unten abgeben.

6. Vorrichtung nach Anspruch 4 oder 5, dadurch gekennzeichnet, daß der Klappe (5) bzw. den Klappen (5) am in Förderrichtung vorderen Ende ein verstellbares und entfernbares Anschlagelement (6) zugeordnet ist.

7. Vorrichtung nach einem der vorangehenden Ansprüche, dadurch gekennzeichnet, daß die Aufnahmekassette (7) einen sich mittig öffnenden Klappboden (8) aufweist.

8. Vorrichtung nach einem der vorangehenden Ansprüche, dadurch gekennzeichnet, daß die Aufnahmekassette (7) mit Hilfe eines Schrittmotors (9) oder Schrittgetriebes angetrieben wird, der derart getaktet ist, daß in seinen Antriebspausen die Behältnisse in die Kassette (7) einführbar und die gebildete Lage aus der Kassette abführbar ist.

9. Vorrichtung nach einem der vorangehenden Ansprüche, dadurch gekennzeichnet, daß die Ablageeinrichtung (10) auf einem Fördersystem (11) hin- und herbeweglich angeordnet ist, derart, daß von der Kassette abgegebene Lagen an unterschiedlichen Stellen der Ablageeinrichtung (10) ablegbar sind.

**10.** Vorrichtung nach Anspruch 9, dadurch gekennzeichnet, daß die Ablageeinrichtung (10) ein Großbehältnis zur Endverpackung ist.

**11.** Vorrichtung nach Anspruch 9, dadurch gekennzeichnet, daß die Ablageeinrichtung ein großes Klappenpaar ist, unter dem ein Großbehältnis angeordnet ist.

**12.** Vorrichtung nach Anspruch 9, dadurch gekennzeichnet, daß die Ablageeinrichtung ein Förderband ist.

**13.** Vorrichtung nach einem der vorangehenden Ansprüche, dadurch gekennzeichnet, daß die Stirn- und/oder Seitenwände der Aufnahmekassette (7) zur Anpassung an unterschiedliche Behältnisgrößen verschiebbar sind.

**14.** Vorrichtung nach einem der Ansprüche 1 bis 12, dadurch gekennzeichnet, daß sie eine Montageeinrichtung zur Anordnung unterschiedlich großer Aufnahmekassetten aufweist.

**15.** Vorrichtung nach einem der Ansprüche 6 bis 14, dadurch gekennzeichnet, daß sie mindestens eine den Abstand der Behältnisse auf der Fördereinrichtung (2, 3) und/oder den Zustand der Behältnisse überwachende Einrichtung aufweist, die zum Ausschleusen von Behältnissen das Anschlagelement (6) zum zeitweisen Entfernen desselben ansteuert.

FIG. 1

FIG. 2

FIG. 3

EP 0 461 513 A2